# FASCICULE DE BREVET EUROPEEN

(11) **EP 0 959 258 B1**
(45) Date de publication et mention de la délivrance du brevet: **02.05.2007**
(21) Numéro de dépôt: 99401184.9
(22) Date de dépôt: 17.05.1999
(51) Int. Cl.: F16C 33/78

(54) **Agencement d'étanchéité pour un roulement**
Dichtungsanordnung für ein Wälzlager
Sealing arrangement for a roller contact bearing

(30) Priorité: 20.05.1998 FR 9806414
(43) Date de publication de la demande: 24.11.1999
(73) Titulaire: RKS S.A., 89204 Avallon (FR)
(72) Inventeur: Catalano, Denis, 89204 Avallon Cédex (FR); Jorrot, François-Xavier, 89204 Avallon Cédex (FR); Bourgeois-Jacquet, Pierre, 89204 Avallon Cédex (FR)
(74) Mandataire: Casalonga, Axel

(56) Documents cités:
- DE-A- 1 919 431
- DE-A- 3 435 437
- FR-A- 1 383 004
- GB-A- 1 099 936
- US-A- 2 276 225
- US-A- 3 203 740
- US-A- 5 683 186

## Description

La présente invention se rapporte à un agencement d'étanchéité pour un roulement présentant au moins une rangée d'éléments roulants entre une première bague et une seconde bague concentriques séparées radialement l'une de l'autre par un espace annulaire, au moins sur un côté de la rangée d'éléments roulants.

Suivant un agencement de ce type connu par le document DE-A-34 35 437, un joint d'étanchéité élastique est fixé, sur un côté de la rangée d'éléments roulants, à la bague intérieure du roulement, laquelle est prolongée sur ce côté axialement au-delà de la bague extérieure. Le joint est fixé par un talon engagé dans une gorge ménagée dans la surface extérieure de la bague intérieure, au-delà de l'espace annulaire entre les deux bagues. Ce joint connu comprend deux lèvres dont la première, située dans l'espace annulaire entre les deux bagues, prend appui contre la surface intérieure cylindrique de la bague extérieure et dont la deuxième située à l'extérieur du roulement prend appui contre la surface frontale radiale de la bague extérieure. La première lèvre est formée à l'extrémité libre d'une partie sensiblement axiale du joint qui s'étend depuis la zone de fixation du joint vers l'intérieur du roulement en direction de la rangée d'éléments roulants, en prenant appui contre la surface extérieure cylindrique de la bague intérieure, la lèvre elle-même étant orientée vers l'extérieur, c'est-à-dire faisant un angle de plus de 90° avec ladite partie axiale. Sur ce joint connu, la deuxième lèvre située à l'extérieur du roulement a pour fonction d'empêcher la pénétration de poussière, humidité, et autres corps étrangers à l'intérieur du roulement, et la première lèvre située à l'intérieur du roulement complète l'action de la lèvre extérieure, c'est-à-dire améliore la protection contre la pénétration d'humidité et autres corps étrangers de l'extérieur vers l'intérieur du roulement.

Il est précisé dans ce document que lors du graissage du roulement, la première lèvre du joint situé à l'intérieur du roulement permet, du fait de sa conformation, le passage de graisse depuis l'intérieur du roulement dans l'espace compris entre les deux lèvres afin que cet espace se remplisse de graisse, dans le but d'améliorer l'effet d'étanchéité.

Or, dans le cas de roulements en général, mais plus particulièrement dans le cas de roulements de grandes dimensions, il se produit, à chaque graissage, une surpression à l'intérieur du roulement, sous l'effet de laquelle le surplus de graisse risque d'être éjecté du roulement à l'endroit du joint. Dans le cas de roulements de grandes dimensions, des clapets de surpression sont prévus pour permettre l'éjection de ce surplus de graisse. Néanmoins, il arrive que le surplus de graisse s'échappe du roulement par les joints plutôt que par ces clapets.

Or, il existe de nombreuses applications où un échappement de graisse par les joints des roulements doit être empêché avec certitude, aussi bien pendant le graissage des roulements, donc lors de la mise sous pression de l'intérieur des roulements, que pendant le fonctionnement normal des roulements, au cours duquel les bagues peuvent effectuer des mouvements relatifs, en plus des mouvements de rotation, sous l'action des charges du roulement.

La présente invention vise un agencement d'étanchéité qui empêche un échappement de graisse au niveau du joint d'étanchéité d'un roulement, même sous l'effet d'une surpression à l'intérieur du roulement.

L'invention vise par ailleurs un agencement qui empêche également une pénétration d'humidité, de poussière et d'autres corps étrangers, à l'intérieur du roulement.

L'agencement d'étanchéité, objet de l'invention, est destiné à un roulement présentant au moins une rangée d'éléments roulants entre une première bague et une seconde bague concentriques séparées radialement l'une de l'autre, au moins sur un côté de la rangée d'éléments roulants, par un espace annulaire. Cet agencement comprend, sur ledit côté du roulement, un unique joint d'étanchéité élastique prévu *pour être fixé* à la première bague et présentant une première lèvre *destinée à venir* en appui contre une surface de portée située sur la seconde bague à l'intérieur dudit espace annulaire. *Pour protéger le roulement contre la pénétration, de l'extérieur, d'humidité, poussière ou autres corps étrangers, le joint présente une seconde lèvre située à l'extérieur du roulement et destinée à venir en appui contre une seconde surface de portée sensiblement radiale de la seconde bague du roulement.* Ladite première surface de portée présente une forme générale en tronc de cône orientée de manière que son prolongement, en direction du côté précité du roulement, se rapproche de ladite première bague. La première lèvre du joint d'étanchéité est conformée de manière que sa force d'appui contre ladite première surface de portée augmente en cas d'accroissement de la pression à l'intérieur du roulement. *Les deux lèvres du joint sont conformées de manière que leurs lignes d'appui contre la seconde bague soient situées sur une surface en tronc de cône faisant avec l'axe du roulement un angle d'environ 30 à 60°, de préférence un angle de l'ordre d'environ 45°.*

Dans l'agencement d'étanchéité conforme à l'invention, ladite première lèvre, du fait de sa conformation particulière et de sa coopération *prévue* avec une surface de portée de conformation particulière, s'oppose d'une manière efficace à tout échappement de graisse, non seulement pendant le fonctionnement normal du roulement, mais également lors du graissage, c'est-à-dire lors de la mise sous pression de l'espace intérieur du roulement, et dans le cas de mouvements relatifs que les deux bagues peuvent effectuer, en plus des mouvements de rotation, sous l'action des charges que le roulement subit en fonctionnement.

De préférence, le joint d'étanchéité peut être fixé de façon connue en soi à la première bague à l'extérieur de l'espace annulaire entre les deux bagues et peut présenter, entre sa zone de fixation et ladite première lèvre, une partie sensiblement axiale en appui contre une surface sensiblement cylindrique de la première bague. Ladite première lèvre peut alors se trouver dans le prolongement de ladite partie axiale du joint, en faisant avec ladite partie axiale un angle de 90° au maximum, de préférence un angle inférieur à 90°.

Toutefois, de préférence, ladite partie axiale du joint peut surface de portée, un angle d'inclinaison supérieur à l'angle d'inclinaison de la première surface de portée de forme générale tronconique.

Suivant un mode de réalisation préféré, ledit flanc de la partie axiale du joint présente un profil incurvé dont l'angle d'inclinaison, par rapport à l'axe du roulement, va en augmentant depuis la zone de fixation du joint en direction de l'extrémité libre de ladite partie, constituant la première lèvre.

La première surface de portée fait avantageusement un angle compris entre environ 30 et 60° et de préférence un angle de l'ordre d'environ 45° avec l'axe du roulement.

Pour protéger le roulement contre la pénétration, de l'extérieur, d'humidité, poussière ou autres corps étranges, le joint peut présenter, de façon connue en soi, une seconde lèvre qui, située à l'extérieur du roulement, se trouve en appui contre une seconde surface de portée sensiblement radiale de la seconde bague du roulement. Les deux lèvres du joint sont alors de préférence dimensionnées et conformées de manière que leurs lignes d'appui contre la seconde bague soient situées sur une surface en tronc de cône faisant avec l'axe du roulement un angle d'environ 30 à 60°, de préférence un angle de l'ordre d'environ 45°. Les deux lèvres qui agissent en sens opposé, c'est-à-dire s'appuient en sens opposé contre leurs surfaces de portée situées sur la même bague du roulement, sont ainsi à même de suivre de façon optimale les mouvements relatifs que les deux bagues du roulement peuvent effectuer sous l'effet des charges (axiales, radiales, moments de renversement) que le roulement peut subir en fonctionnement, sans que le joint ne perde ses fonctions d'étanchéité.

Pour faciliter l'installation du joint sur le roulement, et améliorer son maintien sur le roulement, le joint peut avantageusement comprendre, au-delà de sa zone de fixation, c'est-à-dire, par rapport à cette zone, à l'opposé de la partie axiale portant la première lèvre, un talon annulaire en appui contre la première bague.

L'invention concerne également un roulement comprenant au moins une rangée d'éléments roulants entre une première bague et une seconde bague concentriques séparées radialement l'une de l'autre par un espace annulaire au moins sur un côté du roulement, ladite première surface de portée présentant une forme générale en tronc de cône orienté de manière que son prolongement en direction du côté précité du roulement se rapproche de ladite première bague et un agencement d'étanchéité tel que décrit ci dessus.

En se référant aux dessins annexés, on va décrire ci-après plus en détail un mode de réalisation illustratif et non limitatif , au sens de la R.27 e) CBE, d'un agencement d'étanchéité conforme à l'invention pour un roulement; sur les dessins :
la figure 1 est une demi-coupe d'un roulement, comprenant deux agencements d'étanchéité conformes à l'invention;
la figure 2 est une coupe partielle, à plus grande échelle, du roulement suivant la figure 1.

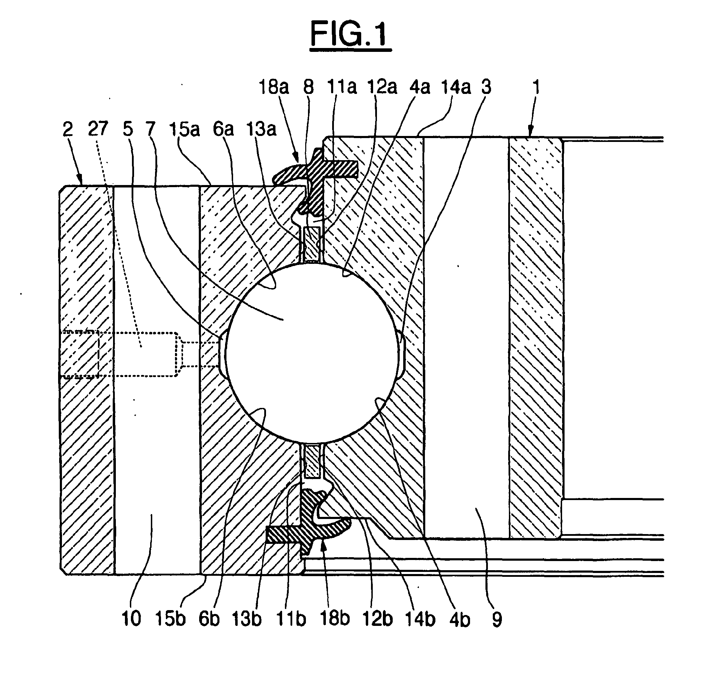

Le roulement tel qu'illustré par la figure 1, est un roulement de grand diamètre à simple rangée de billes, comprenant une bague intérieure 1 et une bague extérieure 2 concentriques. La bague intérieure 1 définit un chemin de roulement intérieur subdivisé par une gorge 3 en deux pistes 4a, 4b en arc de cercle. De façon analogue, la bague extérieure 2 définit un chemin de roulement extérieur subdivisé par une gorge 5 en deux pistes 6a, 6b. Les billes 7 disposées entre les pistes 4a, 4b et 6a, 6b, en étant maintenues espacées les unes des autres par une cage 8, présentent ainsi quatre points de contact avec les bagues 1 et 2.

Les deux bagues 1 et 2 comportent, de façon connue en soi, des trous 9 et 10 pour la fixation des deux bagues à deux parties d'une machine dont le roulement assure la rotation l'une par rapport à l'autre.

Les deux bagues 1 et 2 sont séparées radialement l'une de l'autre, de part et d'autre de la rangée de billes 7, par un espace annulaire 11a, 11b dans lequel tourne la cage 8.

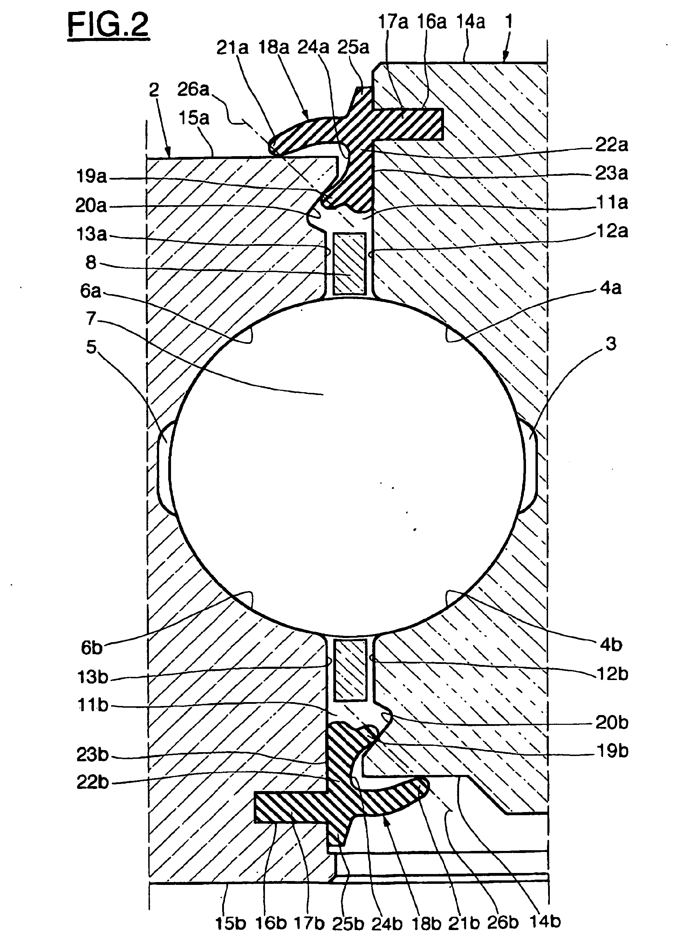

Tel que cela apparaît en particulier sur la figure 2, les deux bagues 1 et 2 sont asymétriques par rapport à un plan transversal radial passant par l'axe des billes 7. En l'occurence, la bague intérieure 1 présente, par rapport audit plan, une largeur axiale plus importante vers le haut que vers le bas, alors qu'au contraire, la bague extérieure 2 présente, par rapport audit plan, une largeur plus faible vers le haut que vers le bas. De ce fait, la bague intérieure 1 dépasse axialement la bague extérieure 2 vers le haut, tandis que la bague extérieure 2 dépasse axialement la bague intérieure 1 vers le bas. La surface extérieure cylindrique 12a de la bague intérieure 1 qui délimite l'espace 11a au-dessus des billes 7, en combinaison avec la surface intérieure cylindrique 13a de la bague extérieure 2, présente donc suivant l'axe du roulement, une dimension plus importante que la surface 13a. Inversement, la surface intérieure cylindrique 13b de la bague extérieure 2 qui délimite, en dessous des billes 7, l'espace annulaire 11b en combinaison avec la surface extérieure cylindrique 12b de la bague intérieure 1, présente suivant l'axe du roulement une dimension plus importante que la surface 12b.

Compte tenu de ces différences de longueurs axiales des surfaces opposées 12a, 13a, d'une part, et 12b, 13b, d'autre part, la surface frontale 15a de la bague extérieure 2, au-dessus des billes 7, se trouve axialement en retrait par rapport à la surface frontale 14a correspondante de la bague intérieure 1, tandis que la surface frontale 14b de la bague intérieure 1, en dessous des billes 7, se trouve axialement en retrait par rapport à la surface frontale 15b correspondante de la bague extérieure 2.

La bague intérieure 1 comporte, dans sa surface extérieure 12a, à un niveau situé entre sa surface frontale 14a et la surface frontale 15a de la bague extérieure 2, une gorge 16a dans laquelle est fixé un talon intérieur 17a d'un joint d'étanchéité annulaire 18a.

Le joint 18a comprend une première lèvre 19a en appui contre une première surface de portée 20a de la bague extérieure 2, et une deuxième lèvre 21a en contact avec la surface 15a de la bague extérieure 2.

La surface de portée 20a est ménagée dans la surface intérieure 6a de la bague 2 sous la forme d'une surface en tronc de cône orientée de manière à converger vers le haut sur le dessin, c'est-à-dire de manière que son prolongement vers le haut se rapproche de la bague intérieure 1. En l'occurence, la surface de portée 20a en tronc de cône fait un angle de l'ordre de 45° avec l'axe du roulement, son prolongement vers le haut passant sensiblement par le débouché de la gorge 16a de la bague intérieure 1. La lèvre 19a se trouve à l'extrémité libre d'une partie 22a du joint 18a, s'étendant axialement depuis le talon de fixation 17a vers l'intérieur du roulement, son flanc intérieur 23a étant en appui contre la surface extérieure 12a de la bague 1. Son flanc extérieur 24a présente un profil incurvé vers l'extérieur, son angle d'inclinaison par rapport à l'axe du roulement allant en augmentant en direction de l'extrémité libre de la partie 22a, où l'angle d'inclinaison du flanc 24a, par rapport à l'axe du roulement, est supérieur à l'angle d'inclinaison de la surface de portée 20a. La lèvre 19a est constituée par l'extrémité libre, arrondie, du flanc extérieur 24a de la partie 22a.

La deuxième lèvre 21a en contact avec la surface radiale 15a de la bague 2, s'étend radialement vers l'extérieur à partir du talon de fixation 17a en étant légèrement incurvée en direction de la surface 15a.

Le joint 18a comporte par ailleurs une partie annulaire 25a s'étendant à l'opposé de la partie 22a, sous la forme d'un talon extérieur en appui contre la surface extérieure 12a de la bague intérieure 1.

Il a noter que dans l'exemple de réalisation représenté, les deux lèvres 19a, 22a et 21 a sont conformées et dimensionnées de manière que leurs lignes d'appui contre la seconde bague 2 (contre les surfaces de portée 20a et 15a) soient situées sur une surface 26a en tronc de cône faisant un angle de l'ordre d'environ 45° avec l'axe du roulement.

L'étanchéité du roulement sur le côté opposé, c'est-à-dire le côté inférieur sur les dessins, est assurée par un joint 18b qui est similaire au joint 18a, mais est inversé par rapport à ce dernier en ce sens qu'il est fixé par un talon 17b dans une gorge 16b de la surface intérieure 13b de la bague extérieure 2 et comprend une partie 22b axiale dont le flanc extérieur 23b est en appui contre la surface intérieure 13b de la bague extérieure 2 et dont le flanc intérieur 24b est incurvé de manière que son inclinaison par rapport à l'axe du roulement aille en augmentant en direction de son extrémité libre constituant une première lèvre 19b en appui contre une surface de portée 20b en tronc de cône ménagée dans la surface extérieure 12b de la bague intérieure 1. Le joint 18b comprend également une deuxième lèvre 21b en contact avec la surface frontale 14b de la bague intérieure 1, et un talon extérieur 25b.

Grâce à cette conformation des joints 18a, 18b, en particulier des lèvres et parties 19a, 22a et 19b, 22b, et des surfaces de portée tronconiques 20a et 20b, les agencements d'étanchéité selon l'invention s'opposent de façon particulièrement efficace à tout échappement de graisse de l'intérieur vers l'extérieur du roulement, toute augmentation de pression à l'intérieur du roulement entraînant un accroissement de la force d'appui des lèvres 19a, 19b contre les surfaces de portée 20a, 20b, sans risque d'expulsion des lèvres 19a, 19b sous l'effet des surpressions susceptibles de s'établir, par exemple, lors du graissage du roulement par les trous graisseurs 27 représentés en tirets sur la figure 1, pour le cas où le roulement ne comporterait pas de clapets de refoulement de graisse ou que la personne chargée du graissage n'aurait pas ouvert lesdits clapets.

Les deux joints 18a, 18b et en particulier leurs lèvres intérieures 19a, 19b, en contact avec les surfaces de portée tronconiques 20a, 20b, conservent leurs fonctions également dans le cas de mouvements relatifs des deux bagues 1 et 2, sous l'action des charges (axiales, radiales, moments de renversement) que le roulement peut subir en fonctionnement.

Il y a lieu de noter que le mode de réalisation représenté et décrit n'a été donné qu'à titre d'exemple indicatif et non limitatif au sens de la R. 27 e) CBE.

L'invention est applicable, non seulement à des roulements à simple rangée de billes à quatre points de contact, mais également à d'autres types de roulements, par exemple à simple rangée de rouleaux croisés ou à trois rangées de rouleaux combinant deux butées et un roulement radial, auquel cas l'une au moins des deux bagues pourrait être divisée.

Les angles d'inclinaison des surfaces de portée 20a, 20b contre lesquels s'appuient les lèvres intérieures 19a, 19b, pourraient présenter des valeurs différentes de 45°, en particulier des valeurs comprises entre environ 30° et 60°.

Chacune des lèvres intérieures 19a, 19b, au lieu d'être formée directement par l'extrémité libre d'un flanc 24a, 24b de la partie 22a, 22b massive, pourrait également être conformée de manière à faire saillie sur, ou à se trouver dans le prolongement de, la partie 19a, 19b axiale, en faisant avec cette dernière un angle de 90° au maximum. Toutefois, la partie 22a, 22b massive, d'épaisseur radiale croissante en direction de son extrémité libre formant directement la lèvre intérieure, présente l'avantage de résister de façon optimale à une expulsion sous l'effet d'une surpression à l'intérieur du roulement.

## Revendications

1. Agencement d'étanchéité pour un roulement présentant au moins une rangée d'éléments roulants (7) entre une première bague (1, 2) et une seconde bague (2, 1) concentriques séparées radialement l'une de l'autre par un espace annulaire (11a, 11b), au moins sur un côté du roulement, cet agencement comprenant un unique joint d'étanchéité (18a, 18b) élastique prévu pour être fixé à la première bagué (1, 2) sur ledit côté du roulement et présentant une première lèvre (19a, 19b) destinée à venir en appui contre une première surface de portée (20a, 20b) située sur la seconde bague (2, 1) du roulement à l'intérieur dudit espace annulaire (11a, 11b), et une seconde lèvre (21a, 21b) destinée à venir en appui, à l'extérieur du roulement, contre une seconde surface de portée (15a, 14b) sensiblement radiale de la seconde bague (2, 1), **caractérisé par le fait que** la première lèvre est conformée de manière que sa force d'appui contre la première surface augmente en cas d'accroissement de la pression à l'intérieur du roulement, ladite première surface de portée (20a, 20b) présentant une forme générale en tronc de cône orienté de manière que son prolongement en direction du côté précité du roulement se rapproche de ladite première bague (1, 2), et que lesdites première lèvre (19a, 19b) et seconde lèvre (21a, 21b) sont conformées de manière que leurs lignes d'appui contre la seconde bague (2, 1) soient situées sur une surface en tronc de cône (26a) faisant avec l'axe du roulement un angle d'environ 30 à 60°, de préférence un angle de l'ordre d'environ 45°..

2. Agencement suivant la revendication 1, **caractérisé par le fait que** la première lèvre est conformée pour coopérer avec une première surface de portée (20a, 20b) présentant une forme générale en tronc de cône et faisant avec l'axe du roulement un angle compris entre environ 30 et 60°, de préférence un angle de l'ordre d'environ 45°.

3. Agencement suivant la revendication 1 ou 2, **caractérisé par le fait que** le joint (18a, 18b) étant destiné à être fixé à la première bague (1, 2) à l'extérieur dudit espace annulaire (11a, 11b) et présentant, entre sa zone de fixation (17a, 17b) prévue pour être située à l'extérieur dudit espace et ladite première lèvre (19a, 19b) prévue pour être située à l'intérieur dudit espace, une partie (22a, 22b) sensiblement axiale prévue pour venir en appui contre une surface (23a, 23b) sensiblement cylindrique de la première bague, ladite première lèvre (19a, 19b) se trouvant dans le prolongement de ladite partie axiale (22a, 22b) en faisant avec cette dernière un angle de moins de 90°.

4. Agencement suivant la revendication 3, **caractérisé par le fait que** ladite partie axiale (22a, 22b) présente une épaisseur radiale qui va en augmentant depuis la zone de fixation (17a, 17b) et dont la zone d'extrémité d'épaisseur maximale constitue ladite première lèvre (19a, 19b).

5. Agencement suivant la revendication 4, **caractérisé par le fait que** ladite partie axiale (22a, 22b) du joint (18a, 18b) présente, sur le côté tourné vers la seconde bague (2), un flanc (24a, 24b) conformé pour faire avec un axe d'un roulement, au droit d'une première surface de portée (20a, 20b), un angle d'inclinaison supérieur à l'angle d'inclinaison de ladite première surface de portée (20a, 20b).

6. Agencement suivant la revendication 5, **caractérisé par le fait que** ledit flanc (24a, 24b) présente un profil incurvé dont l'angle d'inclinaison par rapport à l'axe d'un roulement va en augmentant depuis la zone de fixation (17a) du joint en direction de l'extrémité libre de ladite partie (22a, 22b).

7. Agencement suivant la revendication 5 ou 6, **caractérisé par le fait que** ladite partie axiale (22a, 22b) est massive depuis la zone de fixation (17a, 17b) jusqu'à ladite première lèvre (19a, 19b) située à son extrémité libre.

8. Agencement suivant l'une quelconque des revendications précédentes, **caractérisé par le fait que** le joint (18a, 18b) comprend, à l'opposé de ladite première lèvre (19a, 19b), au-delà de sa zone de fixation, un talon extérieur (25a, 25b) destiné à venir en appui contre la première bague (1, 2).

9. Roulement comprenant au moins une rangée d'éléments roulants (7) entre une première bague (1, 2) et une seconde bague (2, 1) concentriques séparées radialement l'une de l'autre par un espace annulaire (11a, 11b), au moins sur un côté du roulement, ladite première surface de portée (20a, 20b) présentant une forme générale en tronc de cône orienté de manière que son prolongement en direction du côté précité du roulement se rapproche de ladite première bague (1, 2), **caractérisé par le fait qu'**il comprend un agencement d'étanchéité selon l'une quelconque des revendications précédentes.

## Claims

1. Sealing arrangement for a rolling bearing exhibiting at least one row of rolling elements (7) between a first ring (1, 2) and a second ring (2, 1) which are concentric and radially separated from one another by an annular space (11a, 11b), at least on one side of the bearing, this arrangement comprising a single elastic seal (18a, 18b) intended to be fixed to the first ring (1, 2) on the said side of the bearing and exhibiting a first lip (19a, 19b) intended to press against a first bearing surface (20a, 20b) situated on the second ring (2, 1) of the bearing inside the said annular space (11a, 11b), and a second lip (21a, 21b) intended to press, outside the bearing, against a second, substantially radial, bearing surface (15a, 14b) of the second ring (2, 1), **characterized in that** the first lip is shaped in such a way that its pressing force against the first surface increases if the pressure inside the bearing increases, the said first bearing surface (20a, 20b) exhibiting the overall shape of a cone frustum orientated in such a way that its extension towards the aforementioned side of the bearing approaches the said first ring (1, 2), and **in that** the said first lip (19a, 19b) and second lip (21a, 21b) are shaped in such a way that their lines of pressing against the second ring (2, 1) lie on a frustoconical surface (26a) which makes, with the axis of the rolling bearing, an angle of about 30 to 60°, preferably an angle of the order of about 45°.

2. Arrangement according to Claim 1, **characterized in that** the first lip is shaped to cooperate with a first bearing surface (20a, 20b) exhibiting the overall shape of a cone frustum and making, with the axis of the bearing, an angle of between about 30° and about 60°, preferably an angle of the order of about 45°.

3. Arrangement according to Claim 1 or 2, **characterized in that** the seal (18a, 18b) is intended to be fixed to the first ring (1, 2) outside the said annular space (11a, 11b) and exhibits, between its zone (17a, 17b) of attachment, intended to be located outside the said space, and the said first lip (19a, 19b), intended to be located inside the said space, a substantially axial part (22a, 22b) intended to press against a substantially cylindrical surface (23a, 23b) of the first ring, the said first lip (19a, 19b) lying in the extension of the said axial part (22a, 22b), making an angle of under 90° therewith.

4. Arrangement according to Claim 3, **characterized in that** the said axial part (22a, 22b) exhibits a radial thickness which increases from the zone (17a, 17b) of attachment, and the maximum-thickness end zone of which constitutes the said first lip (19a, 19b).

5. Arrangement according to Claim 4, **characterized in that** the said axial part (22a, 22b) of the seal (18a, 18b) exhibits, on the side facing towards the second ring (2), a flank (24a, 24b) which, in line with a first bearing surface (20a, 20b) is shaped to make, with an axis of a bearing, an angle of inclination that is greater than the angle of inclination of the said first bearing surface (20a, 20b).

6. Arrangement according to Claim 5, **characterized in that** the said flank (24a, 24b) exhibits a curved profile of which the angle of inclination with respect to the axis of a rolling bearing increases from the zone (17a) of attachment of the seal towards the free end of the said part (22a, 22b).

7. Arrangement according to Claim 5 or 6, **characterized in that** the said axial part (22a, 22b) is solid from the zone (17a, 17b) of attachment as far as the said first lip (19a, 19b) situated at its free end.

8. Arrangement according to any one of the preceding claims, **characterized in that** the seal (18a, 18b) comprises, on the opposite side to the said first lip (19a, 19b), beyond its zone of attachment, an outer heel (25a, 25b) intended to press against the first ring (1, 2).

9. Rolling bearing comprising at least one row of rolling element (7) between a first ring (1, 2) and a second ring (2, 1) which are concentric and radially separated from one another by an annular space (11), at least on one side of the bearing, the said first bearing surface (20a, 20b) exhibiting the overall shape of a cone frustum, oriented in such a way that its extension towards the aforementioned side of the bearing approaches the said first ring (1, 2), **characterized in that** it comprises a sealing arrangement according to any one of the preceding claims.

## Patentansprüche

1. Dichtungsanordnung für ein Wälzlager, das mindestens eine Reihe von Wälzelementen (7) zwischen einem ersten Ring (1, 2) und einem zweiten Ring (2, 1), die konzentrisch und radial durch einen ringförmigen Raum (11a, 11b) getrennt sind, aufweist, wobei diese Anordnung mindestens auf einer Seite des Wälzlagers eine einzige elastische Dichtung (18a, 18b) aufweist, die dazu vorgesehen ist, am ersten Ring (1, 2) auf der Seite des Wälzlagers befestigt zu werden und eine erste Lippe (19a, 19b), die an einer sich am zweiten Ring (2, 1) des Wälzlagers in dem ringförmigen Raum (11a, 11b) befindenden ersten Anlagefläche (20a, 20b) zur Anlage kommen soll, und eine zweite Lippe (21a, 21b), die außerhalb des Wälzlagers an einer zweiten Anlagefläche (15a, 14b), im Wesentlichen radial zum zweiten Ring (2, 1) zur Anlage kommen soll, aufweist, **dadurch gekennzeichnet, dass** die erste Lippe so konfiguriert ist, dass ihre Anlagekraft an die erste Fläche bei Zunahme des Drucks im Inneren des Wälzlagers zunimmt, wobei die erste Anlagefläche (20a, 20b) die allgemeine Form eines Kegelstumpfs aufweist, der so ausgerichtet ist, dass sich seine Verlängerung in Richtung der oben genannten Seite des Wälzlagers dem ersten Ring (1, 2) annähert, und dass die erste Lippe (19a, 19b) und die zweite Lippe (21a, 21b) so konfiguriert sind, dass sich ihre Anlagelinien an den zweiten Ring (2, 1) auf einer kegelstumpfförmigen Fläche (26a) befinden, die mit der Achse des Wälzlagers einen Winkel von ca. 30 bis 60°, vorzugsweise einen Winkel von ca. 45°, bildet.

2. Anordnung nach Anspruch 1, **dadurch gekennzeichnet, dass** die erste Lippe zum Zusammenwirken mit einer ersten Anlagefläche (20a, 20b) konfiguriert ist, die die allgemeine Form eines Kegelstumpfs aufweist und mit der Achse des Wälzlagers einen Winkel zwischen ca. 30 und 60°, vorzugsweise einen Winkel von ca. 45°, bildet.

3. Anordnung nach Anspruch 1 oder 2, **dadurch gekennzeichnet, dass** die Dichtung (18a, 18b) am ersten Ring (1, 2) außerhalb des ringförmigen Raums (11a, 11b) befestigt werden soll und zwischen seinem Befestigungsbereich (17a, 17b), der zur Anordnung außerhalb des Raums vorgesehen ist, und der ersten Lippe (19a, 19b), die zur Anordnung im Inneren des Raums vorgesehen ist, einen im Wesentlichen axialen Teil (22a, 22b) aufweist, der dazu vorgesehen ist, in Anlage an eine im Wesentlichen zylindrische Fläche (23a, 23b) des ersten Rings zu kommen, wobei sich die erste Lippe (19a, 19b) in der Verlängerung des axialen Teils (22a, 22b) befindet und dabei mit diesem einen Winkel von weniger als 90° bildet.

4. Anordnung nach Anspruch 3, **dadurch gekennzeichnet, dass** der axiale Teil (22a, 22b) eine radiale Dicke aufweist, die von dem Befestigungsbereich (17a, 17b) aus zunimmt und deren Endbereich mit maximaler Dicke die erste Lippe (19a, 19b) bildet.

5. Anordnung nach Anspruch 4, **dadurch gekennzeichnet, dass** der axiale Teil (22a, 22b) der Dichtung (18a, 18b) auf der zum zweiten Ring (2) weisenden Seite eine Flanke (24a, 24b) aufweist, die so konfiguriert ist, dass sie mit einer Achse eines Wälzlagers an einer ersten Anlagefläche (20a, 20b) einen Neigungswinkel bildet, der größer ist als der Neigungswinkel der ersten Anlagefläche (20a, 20b).

6. Anordnung nach Anspruch 5, **dadurch gekennzeichnet, dass** die Flanke (24a, 24b) ein einwärts gekrümmtes Profil aufweist, dessen Neigungswinkel zur Achse eines Wälzlagers von dem Befestigungsbereich (17a) der Dichtung in Richtung des freien Endes des Teils (22a, 22b) zunimmt.

7. Anordnung nach Anspruch 5 oder 6, **dadurch gekennzeichnet, dass** der axiale Teil (22a, 22b) von dem Befestigungsbereich (17a, 17b) bis zu der sich an seinem freien Ende befindenden ersten Lippe (19a, 19b) massiv ist.

8. Anordnung nach einem der vorhergehenden Ansprüche, **dadurch gekennzeichnet, dass** die Dichtung (18a, 18b) gegenüber der ersten Lippe (19a, 19b) hinter ihrem Befestigungsbereich einen äußeren Ansatz (25a, 25b) aufweist, der an dem ersten Ring (1, 2) zur Anlage kommen soll.

9. Wälzlager, das mindestens eine Reihe von Wälzelementen (7) zwischen einem ersten Ring (1, 2) und einem zweiten Ring (2, 1), die konzentrisch und radial durch einen ringförmigen Raum (11a, 11b) getrennt sind, aufweist, wobei die erste Anlagefläche (20a, 20b) mindestens auf einer Seite des Wälzlagers die allgemeine Form eines Kegelstumpfs aufweist, der so ausgerichtet ist, dass sich seine Verlängerung in Richtung der oben genannten Seite des Wälzlagers dem ersten Ring (1, 2) annähert, **dadurch gekennzeichnet, dass** es eine Dichtungsanordnung nach einem der vorhergehenden Ansprüche aufweist.
